# EUROPÄISCHE PATENTSCHRIFT

(11) **EP 2 466 160 B1**
(45) Veröffentlichungstag und Bekanntmachung des Hinweises auf die Patenterteilung: **12.03.2014**
(21) Anmeldenummer: 11009903.3
(22) Anmeldetag: 16.12.2011
(51) Int. Cl.: F16C 25/08, F16C 27/06

(54) **Dämpfungselement für einen elastisch gelagerten Spindeltrieb**
Dampening element for a spindle drive with elastic bearing
Elément d'amortissement pour un entraînement à broche installé de manière élastique

(30) Priorität: 16.12.2010 DE 102010054833
(43) Veröffentlichungstag der Anmeldung: 20.06.2012
(73) Patentinhaber: ThyssenKrupp Presta AG, 9492 Eschen (LI)
(72) Erfinder: Stamm, Zoltan, 9472 Grabs (CH)
(74) Vertreter: Lenzing Gerber Stute

(56) Entgegenhaltungen:
- DE-A1- 2 104 452
- DE-A1- 3 710 185

## Beschreibung

Die vorliegende Erfindung betrifft eine Lagerung nach dem Oberbegriff des Anspruchs 1.

Bei Lenkungen mit einem elektromotorischen Servoantrieb, der über einen Kugelgewindetrieb wirkt, wird die Kugelmutter entweder starr im Gehäuse gelagert oder durch Einsatz von Federelementen und besondere Gestaltung des Gehäuses oder des Lagers eine gewisse Längs- und Kippbewegung ermöglicht. Eine sphärische Lagerung, bei der sowohl der Lagerring als auch das Gestell eine kugelige Fläche aufweisen, ist ebenfalls bekannt. Bei dieser Lösung ist der Mittelpunkt der Kugelfläche in der Mittelebene des Lagers konstruktiv festgelegt. Ähnliche Funktionen werden von Tonnenlagern und Pendelrollenlagern ermöglicht, die einen Winkelfehler der Welle zulassen. Das Ziel dieser Lagerungen ist der Toleranzausgleich, wodurch Verspannungen des Kugelgewindetriebs vermieden werden. Weiter wird die dynamische und statische Belastung der Bauteile reduziert. Es ergeben sich verbesserte akustische Eigenschaften und die Reduktion des mechanischen Spiels, das durch Wärmeausdehnung der Komponenten entsteht.

Bei der beschriebenen Lagerung zwischen Kugelflächen tritt ebenso wie bei der Verwendung von Tonnenlagern und Pendellagern das Problem auf, dass diese Lagerungen eher für Radialkräfte ausgelegt sind. Die in einem elektrisch unterstützten Lenkgetriebe an der Kugelmutter auftretenden Lasten sind jedoch bezüglich der Zahnstange oder Gewindespindel hauptsächlich axial gerichtet.

Die DE 103 10 492 A 1 beschreibt eine Servolenkung, insbesondere für Kraftfahrzeuge, mit einem als Elektromotor gebildeten Servomotor, der ein als Schubstange ausgebildetes, axial verlagerbares Bauelement übereine in einem als Lenkungsgehäuse gebildeten Gestell drehbar, aber axial unverschiebbar gelagerte Mutter antreibt. Der Servomotor, die Schubstange und die Mutter sind mittels eines exzentrischen Lagerringes derart gelagert, dass der Achsabstand zwischen der Motorweile des Servomotors und der Schubstange variierbar ist, was eine einfache, rasche Montage der Servolenkung ermöglicht.

Aus der DE 102 02 483 A1 ist eine elektrische Lenkvorrichtung bekannt, die eine Zahnstange aufweist, die mit einer Lenkspindel verbunden ist, einen Motor zum Unterstützen einer Lenkkraft mit einem koaxial auf der Zahnstange angeordneten Rotor, einen Spindeltrieb, bei dem Kugeln zwischen einer mit dem Rotor verkeilten Mutter und einer auf der Zahnstange gebildeten Schraube eingelegt sind, und die ein Gehäuse aufweist, das insgesamt näherungsweise zylindrisch gestaltet ist. Die Mutter des Kugelumlaufspindelmechanismusses ist drehbar in einem Lager im Inneren des Muttergehäuseabschnittes gelagert.

In der DE 1947337 U ist ein elastisches Wälzlager dargestellt, welches eine axiale Beweglichkeit und eine axiale Federung mit Rückstellkraft aufweist. Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A 1 offenbart die elastische Lagerung einer Schneckenwelle die koaxial die Motorweile eines Servomotors umgreift.

Das Dokument DE 1022429 A zeigt eine Ausgleichsvorrichtung für eine in einem Lager angeordnete Welle, die in Axialrichtung belastbar ist. Die Ausgleichsvorrichtung umfasst einen elastischen Ring, dem ein Zwischenring als stützendes Element zugeordnet ist. Der Zwischenring liegt im Kraftfluss.

Das Dokument DE 3125721 A1 zeigt eine Welle, die in einem Drehlager gelagert ist. Eine axial elastische Abstützung wird mittels Tellerfedern erzielt, die selbst formstabil sind und deshalb keine Stützelemente benötigen.

Das Dokument EP 1710894 A1 zeigt eine elastische Abstützung in Axialrichtung für ein Wellenlager. Zwischen dem Lageraußenring und dem benachbarten Gehäuseteil sind Gummiringe verschiedenen Querschnitts ohne zusätzliche formhaltende Elemente angeordnet.

Die gattungsgemäße EP 2 049 383 B1 zeigt eine Lösung, um die Schwenkbarkeit des Radiallagers zu ermöglichen bzw. zu verbessern. An jeder Stirnseite des Radiallagers ist ein Stahlring mit einem aufvulkanisierten Element mit elastomeren Eigenschaften vorgesehen, welches bei wechselnden Lasten eine axiale und radiale Dämpfung sowie die Durchführung und Dämpfung der Schwenkbewegung des axial verlagerbaren Bauelements ermöglichen soll. Bei Biegemomentbeanspruchung des axial verlagerbaren Bauelements soll ein Verspannen des Systems vermieden werden.

Im Betrieb zeigt sich, dass an den im Kraftfluss liegenden metallischen Trägern der elastomeren Dämpfungselemente Geräusche entstehen Diese Dämpfungselemente weisen zudem ein relativ hohes Eigengewicht auf.

Der Erfindung liegt die Aufgabe zugrunde, eine Lagerung für einen Spindeltrieb zu schaffen, wobei ein Dämpfungselement der Lagerung leichter ist und eine geringere Geräuschentwicklung aufweist.

Diese Aufgabe wird von einer Lagerung mit den Merkmalen des Anspruchs 1 gelöst.

Weil die Lagerung mit einem ringförmigen Dämpfungselement zur Anordnung innerhalb der Lagerung zwischen einem Lagerring eines Wälzlagers und einem Gehäuse versehen ist, wobei das Dämpfungselement ein formhaltendes Element und ein elastomeres Element aufweist, und wobei das Dämpfungselement beidseitig an den relativ zueinander in Axialrichtung beweglichen Flächen des Gehäuses einerseits und des Lagers andererseits anliegt, und wobei das formhaltende Element außerhalb des Kraftflusses liegt, d.h. in dem Gehäuse axial verschieblich angeordnet ist, kann eine besonders leichte Ausführung dieses Bauelements gewählt werden. Zudem kann eine metallische Anlage im Kraftfluss, die im Betrieb zu einer Geräuschentwicklung führen könnte, auf diese Weise vermieden werden. Weiterhin wird durch das im Gehäuse axial verschieblich angeordnete formhaltende Element, die Verbindung des Dämpfungselements mit dem formhaltenden Element von nachteiligen Beanspruchungen in Scherrichtung frei gehalten.

Insbesondere kann das formhaltende Element auch aus Kunststoff gefertigt sein. Das formhaltende Element kann ein konzentrischer Ring sein, der auf der Innenseite des elastomeren Elements oder auf der Außenseite angeordnet ist. Diese Ausführung bedeutet neben Gewichtseinsparung auch einen Kostenvorteil.

Vorzugsweise ist das elastomere Element aus HNBR und das formhaltende Element aus ABS, PS oder HIPS oder einem ähnlichen geeigneten Kunststoff gefertigt.

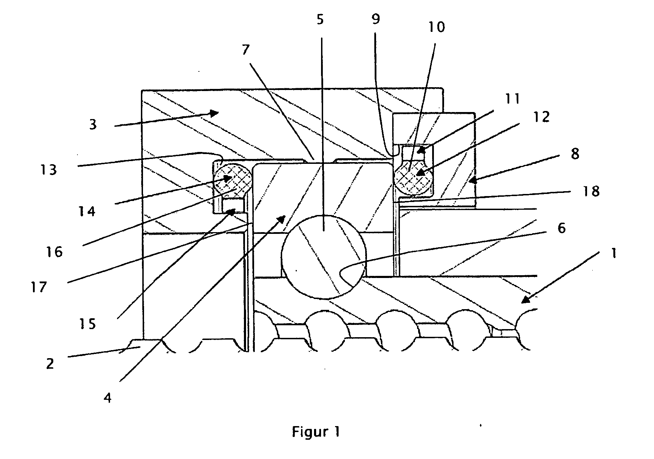

Nachfolgend werden Ausführungsbeispiele der vorliegenden Erfindung anhand der Zeichnung beschrieben. Es zeigt die Figur 1 ein Ausführungsbeispiel der Erfindung in einem Querschnitt in der Anwendung in einem Spindeltrieb.

In der Figur 1 ist schematisch ein Längsschnitt durch ein Lenkgetriebe im Bereich der Lagerung einer Kugelmutter 1 dargestellt. Die Kugelmutter 1 umgibt eine Gewindespindel 2 und steht mit der Gewindespindel 2 derart in Eingriff, dass eine Drehung der Kugelmutter 1 die Gewindespindel 2 in Axialrichtung gegenüber einem Gestell 3, welches Teil eines nicht dargestellten Lenkungsgehäuses ist, verschiebt. Die Kugelmutter 1 ist dazu beispielsweise über einen nicht dargestellten Zahnriemen elektromotorisch antreibbar. Die Lagerung der Kugelmutter 1 gegenüber dem Gestell 3 erfolgt in einem Kugellager mit einem Außenring 4, kugelförmigen Wälzkörpern 5 und einer inneren Lauffläche 6, die unmittelbar auf der Kugelmutter 1 ausgebildet ist, wodurch die Lageranordnung besonders kompakt wird. Anstelle dieser besonders kompakten Ausführung kann an dieser Stelle auch ein Standardwälzlager eingesetzt werden.

Die Lagerung des Außenrings 4 in dem Gestell 3 erfolgt in Radialrichtung derart, dass im Bereich des Lagersitzes das Gestell 3 mit einem Steg 7 versehen ist, der umlaufend angeordnet ist und entlang einer Ringfläche an dem Lageraußenring 4 mit geringem Spiel anliegt. Die Passung ist vorzugsweise als Schiebesitz ausgeführt, so dass der Lageraußenring 4 in Axialrichtung mit geringer Kraft verschieblich ist, wobei die äußere Umfangsfläche des Außenrings 4 dann auf der inneren Umfangsfläche des Stegs 7 gleitet.

Der Lageraußenring 4 ist in dem Gestell 3 in seinem Lagersitz durch ein Sicherungselement 8 gesichert, welches beispielsweise als Schraubring ausgeführt sein kann. Das Sicherungselement 8 weist eine dem Lageraußenring 4 zugewandte Nut 9 mit rechteckigem Querschnitt auf. Die Nutenflanken sind zylindrische umlaufende Flächen, die koaxial zu der Anordnung angeordnet sind, während der Nutengrund eine Kreisringfläche ist, die parallel zu der planen Stirnfläche des Lageraußenrings 4 verläuft. Zwischen dem Lageraußenring 4 und dem Nutengrund ist ein federnd und dämpfend wirkendes Dämpfungselement 10 eingelegt. Das Dämpfungselement 10 weist einen ringförmigen Träger 11 und ein ebenfalls ringförmiges Dämpfungselement 12 auf, welches innen an dem Träger 11 befestigt ist. Das Dämpfungselement 12 ist in Axialrichtung der Anordnung dicker ausgeführt als der Träger 11. Das Dämpfungselement 12 liegt mit einer Seite an der benachbarten Stirnfläche des Lageraußenrings 4 an. Mit der anderen Seite liegt es an dem Nutengrund der Nut 9 an.

Entsprechend ist an der gegenüberliegenden Seite das Gestell 3 mit einer Nut 13 versehen, die ebenfalls einen rechteckigen umlaufenden Querschnitt aufweist und die in Axialrichtung der Anordnung zu dem Lageraußenring 4 hin offen ist. In der Nut 13 liegt ein Dämpfungselement 14 ein, dass einen inneren festen Träger 15 und ein äußeres Dämpfungsteil 16 umfasst. Das Dämpfungsteil 16 ist außen auf dem Träger 15 angebracht. Das Dämpfungsteil 16 ist in Axialrichtung der Anordnung dicker als der Träger 15 und liegt an einer Seite an dem Lageraußenring 4 an, während die andere Seite an dem Nutengrund der Nut 13 anliegt. Im übrigen ist der Lageraußenring 4 so in dem Gestell 3 montiert, dass zu beiden Seiten der Stirnflächen des Lageraußenrings 4 ein Spalt 17 beziehungsweise 18 verbleibt und der Lageraußenring 4 in Axialrichtung um das Spaltmaß beweglich innerhalb des Gestells 3 sitzt.

Bei Belastungen, die auf das Lager der Kugelmutter 1 wirken, kann der Lageraußenring 4 in begrenztem Maße ausweichen, so dass die Kugelmutter 1 entsprechend beweglich ist und geringen Verbiegungen oder schlagartigen Belastungen der Zahnstange 2 folgen kann, ohne dass die Lagerung oder der Kugelumlauf selbst beschädigt wird. Der Steg 7 ermöglicht dabei auch eine Verkippung des Lageraußenrings 4 bei radialen Verbiegungen der Zahnstange 2.

Die Dämpfungselemente 10 und 13 sind bei dieser Ausführungsform besonders vorteilhaft, denn sie sind zum einen preiswert zu fertigen, da der Träger 11 beziehungsweise 15 aus einem festen, formstabilen Kunststoffmaterial gefertigt sein kann, während die Dämpfungsteile 12 beziehungsweise 16 auf einem elastomeren Werkstoff gefertigt sein können. Die Verbindung zwischen den beiden genannten Elementen des Dämpfungselements ist nicht besonders hoch beansprucht, da die Träger 11 beziehungsweise 15 nicht im Kraftfluss liegen, wenn der Lageraußenring 4 bewegt wird. Weiter ist durch das Spaltmaß der Spalte 17 und 18 die Bewegung des Lageraußenrings 4 begrenzt, so dass auch der eigentliche Dämpfungskörper nicht über ein konstruktiv vorgegebenes Maß hinaus komprimiert und belastet werden kann. Für die Montage ist es von Vorteil, dass die Dämpfungselemente 10 und 14 bei der Montage einfach in die Nuten 9 beziehungsweise 13 eingelegt werden können, ohne dass besondere Vorrichtungen hierfür erforderlich wären.

Es ist bei einer Belastung des Dämpfungselements durch axiale Kompression vorteilhaft, wenn das Trägerelement in dem Gestell axial verschieblich ist. Hierdurch wird die Verbindung des Dämpfungselements mit dem Trägerelement von nachteiligen Beanspruchungen in Scherrichtung frei gehalten. Die dargestellte Anordnung des formhaltenden Elements 15 an einer Oberfläche, die parallel zu dem zu erwartenden Kraftfluss orientiert ist, ermöglicht dies in besonders einfacher Weise.

So ergibt sich eine preiswerte, dauerhaft haltbare und einfach zu montierende Lösung und ein besonders geräuscharmer Betrieb wird erzielt, weil die Dämpfungselemente kein metallisches Trägerelement im Kraftfluss aufweisen.

## Patentansprüche

1. Lagerung mit einem ringförmigen Dämpfungselement (10, 14) zur Anordnung innerhalb der Lagerung zwischen einem Lagerring (4) eines Wälzlagers und einem Gehäuse, **dadurch gekennzeichnet, dass** das Dämpfungselement (10, 14) ein formhaltendes Element (11, 15) und ein elastomeres Element (12, 16) aufweist, wobei das Dämpfungselement (10, 14) beidseitig an den relativ zueinander in Axialrichtung beweglichen Flächen des Gehäuses einerseits und des Lagers andererseits anliegt, und wobei das formhaltende Element (11, 15) außerhalb des Kraftflusses liegt, d.h. in dem Gehäuse axial verschieblich angeordnet ist.

2. Lagerung nach Anspruch 1, **dadurch gekennzeichnet, dass** das formhaltende Element (15) aus Kunststoff gefertigt ist.

3. Lagerung nach einem der vorhergehenden Ansprüche,
**dadurch gekennzeichnet, dass** das elastomere Element (12, 16) aus HNBR und das formhaltende Element (11, 15) aus ABS, PS oder HIPS gefertigt sind.

4. Lagerung nach einem der vorhergehenden Ansprüche,
**dadurch gekennzeichnet, dass** das elastomere Element (12, 16) und das formhaltende Element (11, 15) gemeinsam im Coextrusionsverfahren gefertigt sind.

5. Lagerung nach einem der vorhergehenden Ansprüche,
**dadurch gekennzeichnet, dass** das formhaltende Element (11, 15) ein konzentrischer Ring ist, der auf der Innenseite des elastomeren Elements (12, 16) angeordnet ist.

6. Lagerung nach einem der vorhergehenden Ansprüche,
**dadurch gekennzeichnet, dass** das formhaltende Element (11, 15) ein konzentrischer Ring ist, der auf der Außenseite des elastomeren Elements (12, 16) angeordnet ist.

## Claims

1. Bearing with an annular damping element (10, 14) to be arranged within the bearing between a bearing ring (4) of a rolling bearing and a housing, **characterised in that** the damping element (10, 14) has a shape-retaining element (11, 15) and an elastomeric element (12, 16), wherein on either side the damping element (10, 14) sits against the surfaces that are movable relative to one another in the axial direction, of the housing on the one hand, and the bearing on the other, and wherein the shape-retaining element (11, 15) is located outside the flow of forces, that is to say it is arranged in the housing so that it is axially movable.

2. Bearing according to claim 1, **characterised in that** the shape-retaining element (15) is manufactured from synthetic material.

3. Bearing according to any one of the previous claims, **characterised in that** the elastomeric element (12, 16) is manufactured from HNBR and the shape-retaining element (11, 15) from ABS, PS or HIPS.

4. Bearing according to any one of the previous claims, **characterised in that** the elastomeric element (12, 16) and the shape-retaining element (11, 15) are manufactured together in the coextrusion process.

5. Bearing according to any one of the previous claims, **characterised in that** the shape-retaining element (11, 15) is a concentric ring which is arranged on the inner side of the elastomeric element (12, 16).

6. Bearing according to any one of the previous claims, **characterised in that** the shape-retaining element (11, 15) is a concentric ring which is arranged on the outer side of the elastomeric element (12, 16).

## Revendications

1. Support avec un élément d'amortissement (10, 14) annulaire à installer à l'intérieur du Support entre une bague de roulement (4) d'un palier à roulement et un boîtier, **caractérisé en ce que** l'élément d'amortissement (10, 14) présente un élément de maintien de forme (11, 15) et un élément élastomère (12, 16), auquel cas l'élément d'amortissement (10, 14) repose, des deux côtés, sur les surfaces, étant mobiles en direction axiale l'une par rapport à l'autre, du boîtier d'une part et du palier d'autre part, et auquel cas l'élément de maintien de forme (11, 15) se situe à l'extérieur du flux de force, c'est-à-dire qu'il est agencé dans le boîtier de manière axialement mobile.

2. Support selon la revendication 1, **caractérisé en ce que** l'élément de maintien de forme (15) est réalisé en matière synthétique.

3. Support selon l'une quelconque des revendications précédentes, **caractérisé en ce que** l'élément élastomère (12, 16) est réalisé à base de HNBR et l'élément de maintien de forme (11, 15) est réalisé à base de ABS, PS ou HIPS.

4. Support selon l'une quelconque des revendications précédentes, **caractérisé en ce que** l'élément élastomère (12, 16) et l'élément de maintien de forme (11, 15) sont réalisé conjointement conformément au procédé de coextrusion.

5. Support selon l'une quelconque des revendications précédentes, **caractérisé en ce que** l'élément de maintien de forme (11, 15) est un anneau concentrique qui est agencé sur le côté intérieur de l'élément élastomère (12, 16).

6. Support selon l'une quelconque des revendications précédentes, **caractérisé en ce que** l'élément de maintien de forme (11, 15) est un anneau concentrique qui est agencé sur le côté extérieur de l'élément élastomère (12, 16).
